# EUROPEAN PATENT APPLICATION

(11) **EP 4 756 975 A1**
(43) Date of publication of application: **10.06.2026**
(21) Application number: 23948986.7
(22) Date of filing: 12.10.2023
(51) Int. Cl.: H01M 10/0587

(54) **WINDING DEVICE, WINDING PIN, AND WINDING METHOD**

(30) Priority: 15.08.2023 CN 202311023330
(71) Applicant: Contemporary Amperex Technology Co., Limited, Ningde, Fujian 352100 (CN)
(72) Inventor: WU, Kai, Ningde, Fujian 352100 (CN); XIE, Ming, Ningde, Fujian 352100 (CN); LUO, Zhongping, Ningde, Fujian 352100 (CN); LIN, Wenfa, Ningde, Fujian 352100 (CN); DING, Yu, Ningde, Fujian 352100 (CN)
(74) Representative: Ran, Handong
(86) International application number: PCT/CN2023/124122
(87) International publication number: WO 2025/035564

(57) **Abstract**

The present application relates to a winding device, a winding pin, and a winding method. A winding device (100) comprises a base (20) and at least two winding pins (10). The base (20) has a winding position (21) and an ending position (22). The winding position (21) and the ending position (22) are each provided with a winding pin (10), and the winding pin (10) at the winding position (21) can exchange position with the winding pin (10) at the ending position (22). Each winding pin (10) comprises a main body part (11) and a first cutter assembly (12); the first cutter assembly (12) comprises first cutters (121) arranged inside the main body part (11); and the main body part (11) is configured to be capable of rotating circumferentially around its own axial direction relative to the first cutters (121), and the circumference of the main body part (11) is configured to be a winding surface (112) used for winding of a material (300) when the main body part rotates. The winding pin (10) located at the winding position (21) winds the head end of the material (300) on the winding surface (112), and exchanges position with the winding pin (10) located at the ending position (22) when the winding is completed. The first cutters (120) in the winding pin (10) at the winding position (21) after the exchange cut off the tail end located on the winding surface (112). In this way, the winding device (100) of the present application can switch the material (300) at the winding position (21), thereby shortening a feeding length and improving the production efficiency.

## Description

### CROSS-REFERENCE

The present application claims priority to Chinese Patent Application No. 2023110233308, entitled "WINDING APPARATUS, WINDING PIN, AND WINDING METHOD" and filed on August 15, 2023, the entire content of which is incorporated herein by reference.

### TECHNICAL FIELD

The present application relates to the technical field of batteries, and in particular, to a winding apparatus, a winding pin, and a winding method.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, the battery technology is an important factor related to their development.

A battery cell is internally provided with an electrode assembly, which is mainly classified into a wound electrode assembly and a stacked electrode assembly. The wound electrode assembly is formed by sequentially stacking an anode electrode plate, a separator, and a cathode electrode plate and winding them around a winding pin into multiple layers. After the wound electrode assembly is formed through winding, the anode electrode plate, the cathode electrode plate, and the separator are cut off at a cutting position by a cutter, and after trailing-portion winding is completed, the next winding is started.

However, in the related art, the cutter is placed at a position far away from the winding pin, resulting in a long finishing distance after the anode electrode plate, the cathode electrode plate, and the separator are cut off, which makes it impossible to start the next winding in time, affecting the production progress and production quality.

### SUMMARY OF THE INVENTION

In view of the aforementioned problems, the present application provides a winding apparatus, a winding pin, and a winding method.

In a first aspect, the present application provides a winding apparatus, including a base and at least two winding pins. The base has a winding position and a finishing position, and the base has a feeding position at the winding position, the winding position and the finishing position being each provided with a winding pin, where the winding pin at the winding position is capable of exchanging positions with the winding pin at the finishing position. Each of the winding pins includes a main body portion and a first cutter assembly, where the first cutter assembly includes a first cutter disposed inside the main body portion; and the main body portion is configured to be circumferentially rotatable about an axial direction thereof relative to the first cutter, where an outer periphery of the main body portion is configured as a winding-attaching surface for wind-attaching a material during rotation of the main body portion. The winding pin located at the winding position wind-attaches a leading end of the material onto the winding-attaching surface, and after the winding-attaching is completed, performs position exchange with the winding pin located at the finishing position. The first cutter inside the winding pin that is at the winding position after the exchange cuts off a trailing end located on the winding-attaching surface.

In the present application, the two winding pins at the winding position and the finishing position enable mutual cutting, and by disposing the first cutter of each winding pin inside the main body portion, after the trailing end of the material is cut off, the length of the material undergoing finishing is the distance between the winding position and the finishing position. At this time, by appropriately setting the positions, the finishing length can be shortened, eliminating the need for an external cutter to perform cutting.

Furthermore, since the winding pin that moved from the finishing position to the winding position cuts off the trailing-end position of the material at the winding position, when the next winding by the winding pin at the winding position starts, the leading end of the material for the next winding is still located at the winding position, such that the leading end of the material is relatively close to the winding pin at the winding position. At this time, the winding pin located at the winding position can conveniently and quickly start winding, without spending time and cost to convey the material over a long distance, thereby improving the production progress.

In some embodiments, the number of the first cutters included is a plurality, all the first cutters being disposed spaced apart inside the main body portion, with a first channel formed between every two of the first cutters, where the first cutter is configured to cut off the material within the first channel adjacent to the first cutter.

In the technical solution of the embodiments of the present application, by forming first channels between adjacent first cutters, a plurality of materials can be controlled to be located spaced apart within a plurality of first channels, and when the winding pin is exchanged to the winding position, the first cutters cut off the materials inside the winding pin at the winding position, thereby facilitating the next materials and shortening the distance for re-feeding the materials after cutting.

In some embodiments, every two adjacent ones of the first cutters are configured to be movable towards each other to cooperatively cut off the material within the first channel therebetween.

In the technical solution of the embodiments of the present application, when the first cutters move towards each other, they can cut off the material; after the trailing end of the material is cut off, the first cutters at the winding position are controlled to move away from each other, and the main body portion of the winding pin at the finishing position rotates to complete finishing of the material.

In some embodiments, the main body portion has an end surface at one end in the axial direction thereof, and the first cutter assembly is configured to be movable relative to the main body portion along the axial direction of the main body portion and at least partially protrude from the end surface.

In the technical solution of the embodiments of the present application, when the first cutter assembly is hidden inside the main body portion, the material does not contact the first cutter assembly. The main body portion is controlled to rotate and wind the material until winding is completed and then transferred to the finishing position. The first cutter assembly inside the winding pin transferred from the finishing position to the winding position moves relative to the main body portion along the axial direction of the main body portion and partially protrudes from the end surface, comes into contact with the materials, and causes the materials to respectively enter the plurality of first channels, enabling the cutter to cut off the material within the first channel adjacent to the cutter.

In some embodiments, the first cutter assembly further includes a support member, the support member including a plurality of pinch rollers, where each of the first cutters is provided with a pinch roller, and each of the pinch rollers extends along the axial direction of the main body portion; and the support member extends outward from the main body portion along a radial direction of the main body portion, with a second channel communicating in one-to-one correspondance with the first channel formed between every two of the pinch rollers.

In the technical solution of the embodiments of the present application, the support member is configured to support the material entering the first channel. After the winding pin at the winding position completes winding and is transferred to the finishing position, the first cutter assembly inside the winding pin is controlled to move along the axial direction relative to the main body portion and extend outward. At this time, the plurality of pinch rollers and the plurality of first cutters can extend outward along the axial direction from the end surface, separate the trailing-end material of the winding pin and provide a supporting function. The plurality of materials are disposed spaced apart within the respective second channels and then enter the first channels.

In some embodiments, the winding position and the finishing position are disposed radially opposite each other on the base along a circumference.

In the technical solution of the embodiments of the present application, when the winding pin at the winding position and the winding pin at the finishing position are located at the two ends of a set radial direction of a circular track, the first channels inside the winding pin at the winding position and the first channels inside the winding pin at the finishing position are disposed directly opposite along the set radial direction.

In some embodiments, the winding apparatus further includes a second cutter assembly, the second cutter assembly being disposed on the base and located between the winding position and the finishing position.

In the technical solution of the embodiments of the present application, the second cutter assembly is provided. After the first cutter assembly cuts off the anode electrode plate and the cathode electrode plate of a first material, the main body portion of the winding pin at the finishing position is activated to perform finishing winding until finishing of trailing portions of the anode electrode plate and the cathode electrode plate is completed, then a separator is wound alone, and after winding for a certain length, the separator is cut off through separate control of the second cutter assembly to ensure the winding of the electrode plate assembly.

In some embodiments, the second cutter assembly includes an abutting member and a second cutter, the abutting member and the second cutter being configured to be movable relative to the base to move towards each other to cooperatively cut off the material therebetween.

In the technical solution of the embodiments of the present application, when the second cutter and the abutting member move towards each other, the second cutter is capable of abutting the material clamped between them against an abutting surface and cutting it off.

In a second aspect, the present application provides a winding pin, including a main body portion and a first cutter assembly. An outer peripheral surface of the main body has a winding-attaching surface. The first cutter assembly includes a plurality of first cutters, all the first cutters being disposed inside the main body portion, with a first channel formed between every two adjacent ones of the first cutters, where the main body portion is configured to be circumferentially rotatable about an axial direction of the main body portion and to wind-attach a material passing through the first channel onto the winding-attaching surface, and each of the first cutters is configured to be capable of cutting off the material within the first channel adjacent to the first cutter.

In the technical solution of the embodiments of the present application, by disposing the cutter inside the winding pin, the material can be cut off inside the winding pin, facilitating the finishing winding of the material and the start of the next winding, thereby improving the production efficiency.

In some embodiments, the first cutter assembly further includes a support member, the support member including a plurality of pinch rollers, where each of the first cutters is provided with a pinch roller, and each of the pinch rollers extends along an axial direction of the main body portion; and the support member is disposed outside the main body portion, with a second channel communicating in one-to-one correspondance with the first channel formed between every two of the pinch rollers.

In the technical solution of the embodiments of the present application, the support member is configured to support the material entering the first channel. After the winding pin at the winding position completes winding and is transferred to the finishing position, the first cutter assembly inside the winding pin is controlled to move along the axial direction relative to the main body portion and extend outward. At this time, the plurality of pinch rollers and the plurality of first cutters can extend outward along the axial direction from the end surface, separate the trailing-end material of the winding pin and provide a supporting function. The plurality of materials are disposed spaced apart within the respective second channels and then enter the first channels.

In some embodiments, each of the first cutters includes a clamping portion and a cutting portion, the clamping portions of every two adjacent first cutters being configured to clamp the material within the first channel; and the cutting portions of every two adjacent first cutters being configured to cut off the clamped material.

In the technical solution of the embodiments of the present application, the clamping portions of the two first cutters forming the first channel first abut when moving towards each other, and after clamping the material, the cutting portion extends outward at the feeding position to cut off the clamped material. With such a configuration, while the material is being cut off at the feeding position, the trailing end of the material coil on the winding pin at the finishing position is clamped inside the winding pin at the winding position, thereby avoiding the trailing-end flapping phenomenon while cutting off the trailing end of the material.

In some embodiments, the main body portion has an end surface at one end in the axial direction thereof, and the first cutter assembly is configured to be movable relative to the main body portion along the axial direction of the main body portion and at least partially protrude from the end surface.

In the technical solution of the embodiments of the present application, when the first cutter assembly is hidden inside the main body portion, the material does not contact the first cutter assembly. When the first cutter assembly inside the winding pin moves relative to the main body portion along the axial direction of the main body portion and partially protrudes from the end surface, it comes into contact with the materials, and causes the materials to separately enter the plurality of first channels, enabling the cutter to cut off the material within the first channel adjacent to the cutter.

In a second aspect, the present application provides a winding method, including the following steps:
controlling a main body portion of a winding pin located at a winding position to circumferentially rotate about an axial direction of the main body portion to wind-attach a leading end of a material at a feeding position onto a winding-attaching surface on an outer periphery of the main body portion;
controlling, after the winding-attaching by the winding pin at the winding position is completed, the winding pin at the winding position to exchange positions with a winding pin at a finishing position; and
controlling a first cutter inside the winding pin that is at the winding position after the exchange to cut off a trailing end of the material located on the winding-attaching surface.

In the technical solution of the embodiments of the present application, after the trailing end of the material is cut off, the length of the material undergoing finishing at the finishing position is the distance between the winding position and the finishing position. By appropriate setting, the distance between the winding position and the finishing position can be shortened, thereby shortening the finishing length. Furthermore, for the winding pin which has completed finishing at the finishing position, after the material coil thereon is removed, it can return to an idle state, so as to facilitate the next cooperation with the winding pin at the winding position.

Moreover, since the winding pin currently moved to the winding position cuts off the trailing end of the previous material coil at the feeding position, when the next winding starts, the leading end of the material is still located at the winding position. Therefore, the leading end of the material is relatively close to the winding pin, and at this time, the winding pin located at the winding position can conveniently and quickly start winding the next material coil, thereby improving the production progress.

In some embodiments, the winding method further includes:
controlling a first cutter assembly inside the winding pin that is located at the finishing position after the exchange to move relative to the main body portion along the axial direction of the main body portion and to at least partially protrude from an end surface, so as to dispose the material spaced apart within a plurality of first channels and a plurality of second channels of the first cutter assembly.

In the technical solution of the embodiments of the present application, the support member is configured to support the material before it enters the first channel. After the winding pin at the winding position completes winding and is transferred to the finishing position, the first cutter assembly inside the winding pin is controlled to extend outward. The plurality of pinch rollers can extend outward along the axial direction of the main body portion from the end surface, separate the trailing-end material of the winding pin and provide a supporting function. At this time, the plurality of materials are disposed spaced apart within the respective second channels and then extend into the first channels.

It can be understood that, before the first cutter assembly inside the winding pin at the finishing position protrudes from the end surface, the trailing-end material of the material on the winding-attaching surface of the winding pin extends along a tangential direction of the winding-attaching surface; and after the first cutter assembly protrudes from the end surface, the plurality of pinch rollers change the extension direction of the trailing-end material, causing it to be disposed spaced apart and parallel between the plurality of pinch rollers.

In some embodiments, the winding method further includes:
controlling a first cutter assembly inside the winding pin that is located at the winding position after the exchange to move relative to the main body portion along the axial direction of the main body portion and to at least partially protrude from the end surface.

In the technical solution of the embodiments of the present application, when the first cutter assembly inside the winding pin at the winding position extends outward, the plurality of materials supported by the plurality of pinch rollers at the finishing position can naturally enter the first channels and the second channels of the winding pin at the winding position, thereby facilitating the cutting of the material by the cutter at the winding position.

In some embodiments, cutting off the trailing end of the material specifically includes:
controlling every two of the first cutters inside the winding pin located at the winding position to move towards each other to cooperatively cut off the material within the first channel.

In the technical solution of the embodiments of the present application, cutting-off of the material can be completed at the feeding position of the winding position, so as to facilitate the next feeding and winding.

In some embodiments, after cutting off the trailing end of the material, the method further includes:
controlling the main body portion of the winding pin located at the finishing position to rotate about the axial direction of the main body portion to wind-attach the trailing end of the material onto the winding-attaching surface.

In the technical solution of the embodiments of the present application, since the trailing end of the material is cut off at the winding position, by reasonably designing the winding position and the finishing position on the base, the distance for trailing-end finishing can be shortened, alleviating the winding disqualification phenomenon caused by an excessively long finishing distance when the winding pin at the finishing position completes finishing of the material.

Moreover, the winding pin located at the winding position, after completing cutting off the material, can subsequently continue the winding-attaching process; at this time, the leading end of the material is directly located at the winding position, thereby simplifying the production process and improving the production efficiency.

In some embodiments, the winding method further includes:
controlling the first cutter assembly inside the winding pin located at the finishing position to move relative to the main body portion along the axial direction of the main body portion into the main body portion.

In the technical solution of the embodiments of the present application, the trailing end of the material supported by the support member returns to its original position, so as to facilitate the subsequent continued winding of the trailing-end material by the winding pin, and avoid the need for the main body portion to overcome the force applied by the support member during winding.

Details of one or more embodiments of the present application are provided in the accompanying drawings and descriptions below. Other features, objectives, and advantages of the present application will become apparent from the specification, drawings, and claims.

### DESCRIPTION OF DRAWINGS

In order to illustrate technical solutions of the embodiments of the present application more clearly, a brief introduction of drawings to be used in the embodiments of the present application will be provided below. Apparently, the drawings described below are merely some examples of the present application, and other drawings can be obtained according to these drawings by those ordinarily skilled in the art without creative efforts.
FIG. 1 is a structural exploded view of a battery cell according to one or more embodiments of the present application;
FIG. 2 is a structural view of an electrode assembly according to one or more embodiments of the present application;
FIG. 3 is a schematic plan view of a winding apparatus in one state according to one or more embodiments of the present application;
FIG. 4 is a perspective plan structural view of a winding pin according to one or more embodiments of the present application;
FIG. 5 is a plan structural view of a winding pin according to one or more embodiments of the present application;
FIG. 6 is a schematic plan view of the winding apparatus in another state according to one or more embodiments of the present application;
FIG. 7 is a schematic plan view of the winding apparatus in a third state according to one or more embodiments of the present application;
FIG. 8 is a schematic plan view of the winding apparatus in a fourth state according to one or more embodiments of the present application;
FIG. 9 is a first exemplary schematic flowchart of a winding method according to one or more embodiments of the present application;
FIG. 10 is a second exemplary schematic flowchart of the winding method according to one or more embodiments of the present application;
FIG. 11 is a third exemplary schematic flowchart of the winding method according to one or more embodiments of the present application;
FIG. 12 is a fourth exemplary schematic flowchart of the winding method according to one or more embodiments of the present application;
FIG. 13 is a fifth exemplary schematic flowchart of the winding method according to one or more embodiments of the present application; and
FIG. 14 is a sixth exemplary schematic flowchart of the winding method according to one or more embodiments of the present application.

200, battery cell; 210, case; 220, electrode assembly; 2201, anode electrode plate; 2202, cathode electrode plate; 2203, separator; 230, end cover; 100, winding apparatus; 10, winding pin; 11, main body portion; 111, end surface; 112, winding-attaching surface; 12, first cutter assembly; 121, first cutter; 121a, clamping portion; 121b, cutting portion; 122, first channel; 123, support member; 1231, pinch roller; 1232, second channel; 20, base; 21, winding position; 22, finishing position; 24, third position; 30, second cutter assembly; 31, abutting member; 32, second cutter; 300, material; 310, first material; 320, second material; L1, axial direction; L2, radial direction.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned DESCRIPTION OF DRAWINGS are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, their market demand is also constantly increasing.

An electrode assembly is provided inside a battery cell. The electrode assembly is an important energy aggregation part of the battery cell. During the manufacturing of a wound electrode assembly, it is necessary to provide an anode electrode plate roll, a cathode electrode plate roll, and a separator roll. A leading end of the anode electrode plate on the anode electrode plate roll, a leading end of the cathode electrode plate on the cathode electrode plate roll, and a leading end of the separator on the separator roll are sequentially stacked outside a winding pin and, with the rotation of the winding pin, are respectively peeled off from the anode electrode plate roll, the cathode electrode plate roll, and the separator roll and wound onto the winding pin, forming a final electrode assembly.

After winding of one electrode assembly is completed, the anode electrode plate, the cathode electrode plate, and the separator need to be cut off by a cutter at a cutting position, and after trailing-portion winding is completed, the next winding is started. However, in existing winding apparatuses, the position of the cutter is far away from the winding pin, resulting in a long finishing distance for the current electrode assembly after the anode electrode plate, the cathode electrode plate, and the separator are cut off, which easily causes the trailing-portion winding to fail to meet requirements or causes misalignment of the electrode plates and the separator. Moreover, when the next electrode assembly winding production is started after the cutting-off, the leading ends of the anode electrode plate, the cathode electrode plate, and the separator are far away from the winding pin, and winding cannot be started in time, affecting the production progress.

Based on the above considerations, in order to solve the problem of the production progress and production quality being affected by the cutting position being too far away from the winding pin, the present application provides a winding apparatus, which is capable of reducing the distance between the cutting position of the cutter and the winding pin, facilitating the trailing-portion winding of the previous electrode plate assembly and the feeding for winding of the next electrode plate assembly, thereby improving the production progress and the production quality of the electrode assembly.

The winding apparatus disclosed in the embodiments of the present application can be used for winding and forming an electrode assembly during battery production, and can also be used in other production apparatuses and processes to provide a winding preparation process for other materials.

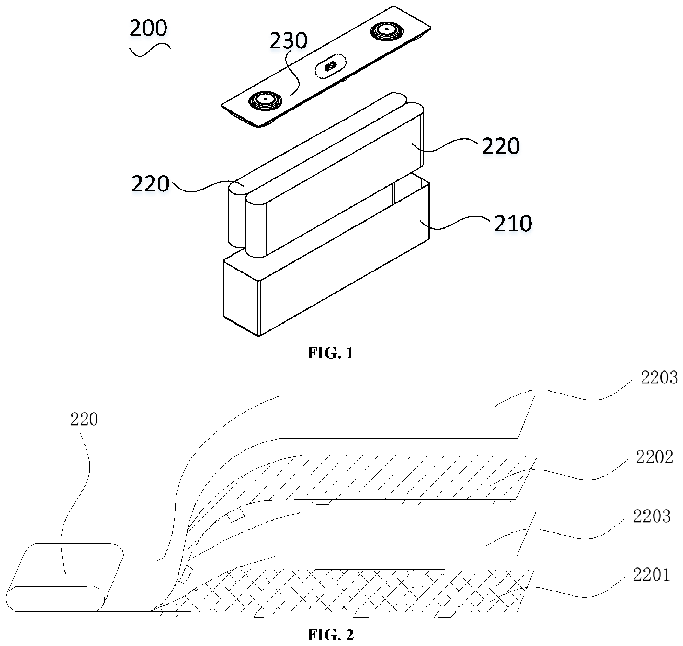

As shown in FIG. 1, specifically, the battery cell 200 includes a case 210, an end cover 230, an electrode assembly 220, and other functional components. The case 210 is a component configured to form an internal environment of the battery cell 200. The formed internal environment can be configured to accommodate the electrode assembly 220, an electrolyte solution, and other components. The end cover 230 is a component configured to cover an opening of the case 210 to isolate the internal environment of the battery cell 200 from the external environment. Without limitation, the shape of the end cover 230 may be adapted to the shape of the case 210 to fit the case 210. The end cover 230 can be made of a material (such as aluminum alloy) having a certain hardness and strength, such that the end cover 230 is not easily deformed when squeezed or collided, enabling the battery cell 200 to possess higher structural strength.

The electrode assembly 220 is a component where electrochemical reactions occur within the battery cell 200. The case 210 may contain one or more electrode assemblies 220 inside. As shown in FIG. 2, the wound electrode assembly 220 is mainly formed by winding an anode electrode plate 2201 and a cathode electrode plate 2202 on a winding pin 10, and a separator 2203 is typically provided between the anode electrode plate 2201 and the cathode electrode plate 2202. The portions of the anode electrode plate 2201 and the cathode electrode plate 2202 having an active material constitutes a main body of the electrode assembly 220. The portions of the anode electrode plate 2201 and the cathode electrode plate 2202 not having the active material each constitute a tab. The anode tab and the cathode tab may be located together at one end of the main body or located at the two ends of the main body, respectively. During charging and discharging of the battery, the anode active material and the cathode active material react with the electrolyte solution, and the tabs are connected to electrode terminals to form a current loop.

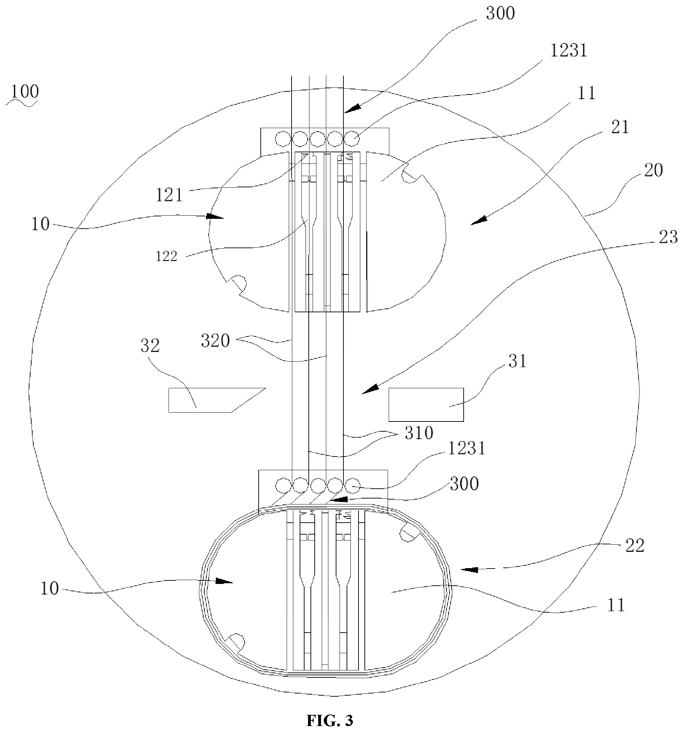

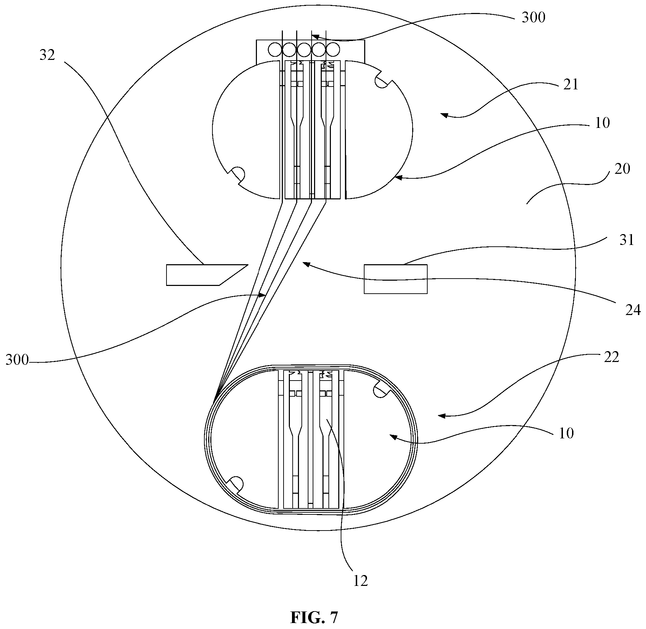

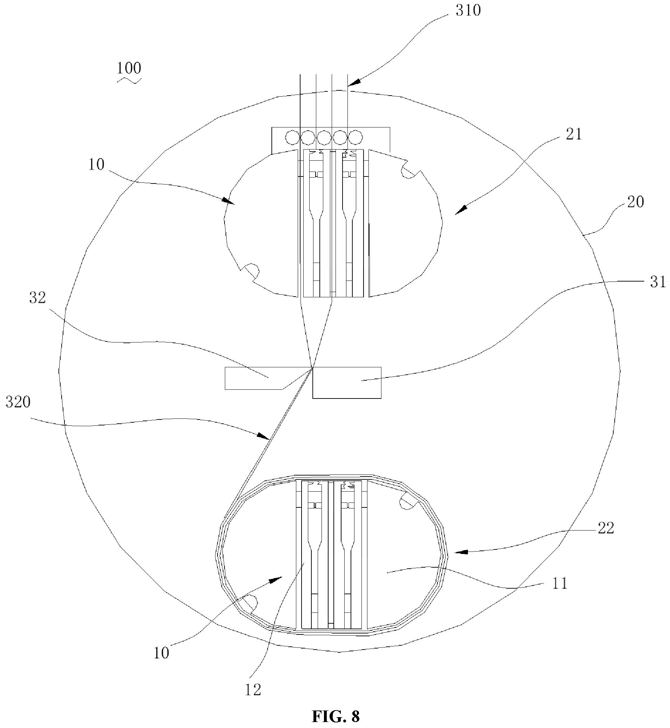

According to some embodiments of the present application, referring to FIGS. 3 to 8, the present application provides a winding apparatus 100, including a base 20 and at least two winding pins 10. The base 20 has a winding position 21 and a finishing position 22, the winding position 21 and the finishing position 22 being each provided with a winding pin 10, where the winding pin 10 at the winding position 21 is capable of exchanging positions with the winding pin 10 at the finishing position 22.

Referring to FIGS. 3 to 5, each winding pin 10 includes a main body portion 11 and a first cutter assembly 12, where an outer periphery of the main body portion 11 has a winding-attaching surface 112, the first cutter assembly 12 includes a first cutter 121 disposed inside the main body portion 11, and the main body portion 11 is configured to be circumferentially rotatable about an axial direction L1 thereof relative to the first cutter 121, where an outer periphery of the main body portion is configured as the winding-attaching surface 112 for winding-attaching a material during rotation of the main body portion.

The winding pin 10 located at the winding position 21 wind-attaches a leading end of the material 300 onto the winding-attaching surface 112, and after the winding-attaching is completed, performs position exchange with the winding pin 10 located at the finishing position 22. The first cutter 121 inside the winding pin 10 that is at the winding position 21 after the exchange cuts off a trailing end of 300 located on the winding-attaching surface 112.

The base 20 refers to a structure capable of providing an installation foundation for the plurality of winding pins 10. The winding position 21 refers to a station where the winding pin 10 can connect to the leading end of the material 300 at this position and gradually wind-attach it onto the winding-attaching surface 112. The winding position 21 also refers to a station where the winding pin 10 exchanged from the finishing position 22 to the winding position 21 cuts off the material 300 at the winding position 21.

The finishing position 22 refers to a station where the winding pin 10, after completing the winding-attaching process of the material 300 at the winding position 21, moves to the finishing position 22 to complete the winding of the trailing end of the material 300 to end the entire winding process. The finishing position 22 also refers to a station for carrying the winding pin 10 in an idle process while the winding pin 10 at the winding position 21 is performing the winding-attaching process.

The winding position 21 and the finishing position 22 are each provided with a winding pin 10. After the winding pin 10 completes a set operation process at the winding position 21 while the winding pin 10 at the finishing position 22 completes a set working process at the finishing position 22, the two execute a position exchange, transferring the winding pin 10 at the winding position 21 to the finishing position 22 and transferring the winding pin 10 at the finishing position 22 to the winding position 21.

The winding pin 10 refers to a mechanism capable of being used for winding the material 300. The main body portion 11 refers to a structure mainly responsible for bearing the winding of the material 300, which has the winding-attaching surface 112 for directly contacting the material 300. After the leading end of the material 300 is connected to the winding pin 10 at the winding position 21, with the rotation of the main body portion 11, the leading end of the material 300 can be wound onto the winding-attaching surface 112 in successively superimposed turns.

It can be understood that the specific shape of the winding-attaching surface 112 determines the shape of the finally formed material coil. For example, the winding-attaching surface 112 can be a closed circle or ellipse, and in this case, the finally formed material coil can be circular or elliptical, such as the electrode assembly 220.

After one winding of the material 300 is completed, an appropriate structural arrangement can be made to allow the winding pin 10 to separate from the material coil on its winding-attaching surface 112, so as to facilitate the next winding by the winding pin 10.

It can be understood that during the circumferential rotation of the main body portion 11, the first cutter 121 disposed inside the main body portion 11 does not rotate synchronously with the main body portion 11. Taking a winding pin 10 being at the winding position 21 as an initial starting station as an example, the main body portion 11 of the winding pin 10 is controlled to start rotating to gradually layer and wind the leading end of the material 300 onto the winding-attaching surface 112, and until winding for a set number of turns, the winding-attaching is completed. The winding of the main body portion 11 is stopped and a position exchange with the winding pin 10 located at the finishing position 22 is executed. The winding pin 10 that completed winding-attaching at the winding position 21 moves along with the material 300 thereon to the finishing position 22. At this time, the winding pin 10 in the idle state at the finishing position 22 moves to the winding position 21. At the winding position 21, the trailing end of the material 300 located on the winding-attaching surface 112 of the winding pin 10 at the finishing position 22 is cut off. The main body portion 11 at the finishing position 22 is then activated to rotate to complete the finishing of the material 300, and the winding pin 10 at the finishing position 22 completes the finishing.

As such, the two winding pins 10 at the winding position 21 and the finishing position 22 enable mutual cutting, and by disposing the first cutter 121 of each winding pin 10 inside the main body portion 11, after the trailing end of the material 300 is cut off, the length of the material 300 undergoing finishing is the distance between the winding position 21 and the finishing position 22. At this time, by appropriately setting the positions, the finishing length can be shortened, eliminating the need for an external cutter to perform cutting.

Furthermore, since the winding pin 10 that moved from the finishing position 22 to the winding position 21 cuts off the trailing-end position of the material 300 at the winding position 21, when the next winding by the winding pin 10 at the winding position 21 starts, the leading end of the material 300 for the next winding is still located at the winding position 21, such that the leading end of the material 300 is relatively close to the winding pin 10 at the winding position 21. At this time, the winding pin 10 located at the winding position 21 can conveniently and quickly start winding, without spending time and cost to convey the material 300 over a long distance, thereby improving the production progress.

Furthermore, for the winding pin 10 which has completed finishing at the finishing position 22, after the material 300 roll thereon is removed, it can return to an idle state, so as to facilitate the next cooperation with the winding pin 10 at the winding position 21.

According to some embodiments of the present application, referring to FIGS. 3 to 5, the number of first cutters 121 inside each winding pin 10 is a plurality, all the first cutters 121 being disposed spaced apart inside the main body portion 11, with a first channel 122 formed between every two of the first cutters 121, where the first cutter 121 is configured to cut off the material 300 within the first channel 122 adjacent to the first cutter.

It can be understood that a material roll may be disposed outside the winding apparatus 100. After a leading end of the material 300 on the material roll is guided and connected to the winding pin 10 located at the winding position 21, with the rotation of the main body portion 11 of the winding pin 10, the material 300 is gradually peeled off from the material roll. When the winding pin 10 located at the winding position 21 completes winding-attaching and moves to the finishing position 22, the material 300 on the winding pin 10 is still connected to the external material roll and, with the movement of the winding pin 10, the material 300 extends from the winding position 21 to the finishing position 22.

Thereafter, the winding pin 10 exchanged from the finishing position 22 to the winding position 21 is controlled to operate to dispose the materials 300 spaced apart within the first channels 122 between the plurality of first cutters 121. Through the action of each first cutter 121, the material 300 that needs to be cut off can be selectively cut off within the first channels 122 at the winding position 21.

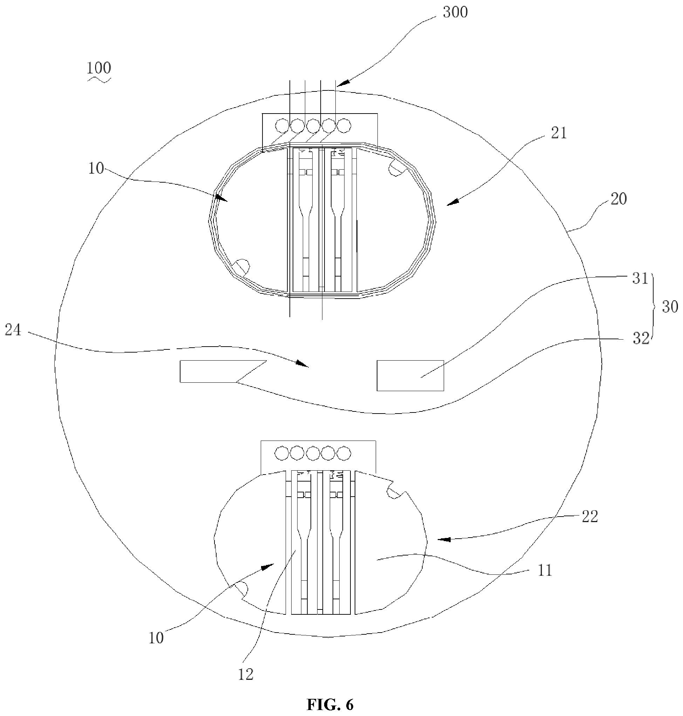

It can be understood that the winding pin 10 located at the winding position 21 has two processes: a winding-attaching process and a cutting-off process. During the winding-attaching process, as shown in FIG. 6, the leading end of the material 300 is continuously wound onto the winding-attaching surface 112. After the winding-attaching process is completed, it exchanges positions to the finishing position 22, as shown in FIG. 3. Simultaneously, the winding pin 10 at the finishing position 22 exchanges positions to the winding position 21 to perform the cutting-off process. That is, the winding-attaching process and the cutting-off process for forming one material coil do not occur on the same winding pin 10.

Similarly, the winding pin 10 located at the finishing position 22 also has two processes: an idle process and a finishing process. When the winding pin 10 at the winding position 21 is in the winding-attaching process, the winding pin 10 at the finishing position 22 is in the idle process (i.e., the winding pin 10 does not operate at this time). When the winding pin 10 at the winding position 21 is in the cutting-off process, the winding pin 10 at the finishing position 22 is in the finishing process.

If the winding pin 10 initially placed at the winding position 21 is taken as a first perspective, each winding pin 10 will first experience the winding-attaching process at the winding position 21, and then experience the finishing process at the finishing position 22. From the perspective of the winding pin 10 initially placed at the finishing position 22, the winding pin 10 will first experience the idle process at the finishing position 22, and then experience the cutting-off process at the winding position 21, thereby completing the mutual cooperation of the winding pins 10 at the two positions.

As such, in the winding pin 10 of the present application, by forming first channels 122 between adjacent first cutters 121, a plurality of materials 300 can be controlled to be located spaced apart within a plurality of first channels 122, and when the winding pin 10 is exchanged to the winding position 21, the first cutters 121 cut off the materials 300 inside the winding pin 10 at the winding position 21, thereby facilitating the next materials 300 and shortening the distance for re-feeding after the material 300 is cut off.

According to some embodiments of the present application, every two adjacent ones of the first cutters 121 are configured to be movable towards each other to cooperatively cut off the material 300 within the first channel 122 therebetween.

Specifically, a drive mechanism may be provided to drive the first cutter 121 to move relative to the main body portion 11 inside the main body portion 11, so as to move to cut off the material 300 when cutting-off of the material 300 is required, and to ensure that the material 300 can extend out from within the first channel 122 along the extending direction of the first channel 122 when cutting-off of the material 300 is not required.

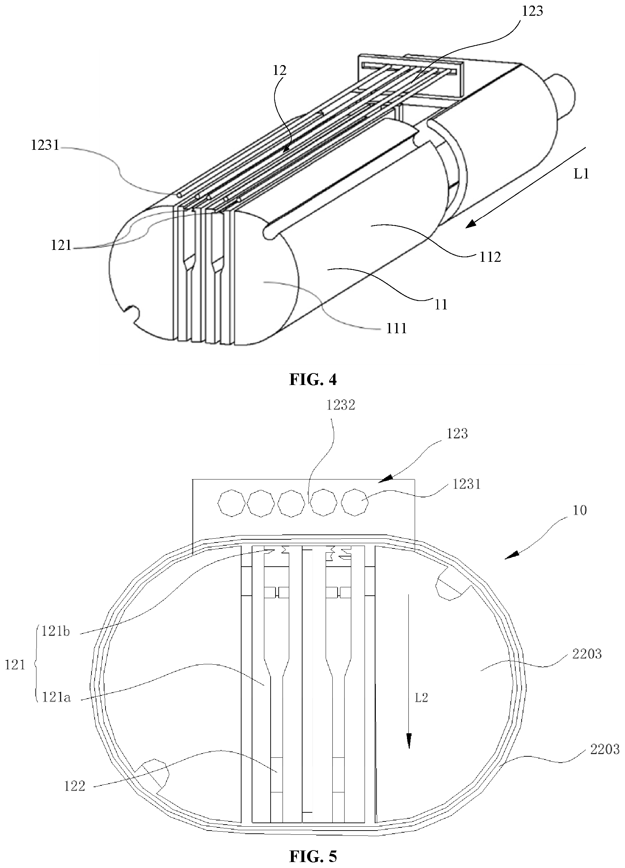

Furthermore, along the extending direction of the first channel 122, as shown in FIG. 5, each first cutter 121 includes a clamping portion 121a and a cutting portion 121b. The clamping portions 121a of the two first cutters 121 forming the first channel 122 first abut when moving towards each other, and after clamping the material 300, the cutting portion 121b extends outward at the feeding position to cut off the clamped material 300.

With such a configuration, while the material 300 is being cut off, the trailing end of the material 300 on the winding pin 10 located at the finishing position 22 is clamped inside the winding pin 10 at the winding position 21, thereby avoiding the trailing-end flapping phenomenon while cutting off the trailing end of the material 300.

After the trailing end of the material 300 is cut off, the first cutters 121 at the winding position 21 are controlled to move away from each other, and the main body portion 11 of the winding pin 10 at the finishing position 22 is controlled to rotate to complete the finishing of the material 300. At this time, the length of the material 300 undergoing finishing may be the distance between the two winding pins 10. As such, by reasonably designing the winding position 21 and the finishing position 22 on the base 20, the distance for trailing-end finishing can be shortened, alleviating the winding disqualification phenomenon caused by an excessively long finishing distance when the winding pin 10 at the finishing position 22 completes the finishing of the material 300, and avoiding the problem of excessively long leading-trailing distances caused by an external cutting structure.

Moreover, the winding pin 10 located at the winding position 21, after the cutting portion 121b completes cutting off the material 300, can subsequently continue the next winding-attaching process. At this time, the leading end of the material 300 is directly located at the winding position 21. It is only necessary to connect the leading end and the trailing end of the material 300 to the main body portion 11 to perform winding, without spending excessive time guiding the leading end of the material 300 to the winding position 21, thereby simplifying the production process and improving the production efficiency.

According to some embodiments of the present application, referring to FIG. 4, the main body portion 11 has an end surface 111 at one end in the axial direction L1 thereof, and the first cutter assembly 12 is configured to be movable relative to the main body portion 11 along the axial direction L1 of the main body portion 11 and at least partially protrude from the end surface 111.

When the first cutter assembly 12 is hidden inside the main body portion 11, the material 300 does not contact the first cutter assembly 12. The main body portion 11 is controlled to rotate and wind the material 300 until winding is completed and then transferred to the finishing position 22. The first cutter assembly 12 inside the winding pin 10 transferred from the finishing position 22 to the winding position 21 moves relative to the main body portion 11 along the axial direction L1 of the main body portion 11 and partially protrudes from the end surface 111, comes into contact with the materials 300, and causes the materials 300 to respectively enter the plurality of first channels 122, enabling the cutter to cut off the material 300 within the first channel 122 adjacent to the cutter.

Subsequently, after the winding pin 10 at the winding position 21 cuts off the trailing end of the material 300, the first cutter assembly 12 can be controlled to retract for the next winding operation.

According to some embodiments of the present application, referring to FIGS. 3 and 4, the first cutter assembly 12 further includes a support member 123, the support member 123 including a plurality of pinch rollers 1231, where each of the first cutters 121 is provided with a pinch roller 1231, and each of the pinch rollers 1231 extends along the axial direction L1 of the main body portion 11; and the support member 123 extends outward from the main body portion 11 along a radial direction L2 of the main body portion 11, with a second channel 1232 communicating in one-to-one correspondance with the first channel 122 formed between every two of the pinch rollers 1231.

The support member 123 is configured to support the material 300 that has entered the first channel 122. After the winding pin 10 at the winding position 21 completes the winding-attaching process and is transferred to the finishing position 22, the first cutter assembly 12 inside the winding pin 10 is controlled to move along the axial direction L1 relative to the main body portion 11 and extend outward. At this time, the plurality of pinch rollers 1231 and the plurality of first cutters 121 can extend outward along the axial direction L1 from the end surface 111, separate the trailing-end material 300 of the winding pin 10 and provide a supporting function. The plurality of materials 300 are disposed spaced apart within the respective second channels 1232 and then enter the first channels 122.

It can be understood that, before the first cutter assembly 12 inside the winding pin 10 at the finishing position 22 protrudes from the end surface 111, the trailing-end material 300 of the material 300 on the winding-attaching surface 112 of the winding pin 10 extends along a tangential direction of the winding-attaching surface 112; and after the first cutter assembly 12 protrudes from the end surface 111, the plurality of pinch rollers 1231 change the extension direction of the trailing-end material 300, causing it to be disposed spaced apart and parallel between the plurality of pinch rollers 1231.

Meanwhile, the winding pin 10 located at the winding position 21 controls the first cutter assembly 12 to extend outward. The plurality of materials 300, which have been separated by the pinch rollers 1231 at the finishing position 22, can naturally enter the first channels 122 and the second channels 1232 of the winding pin 10 at the winding position 21, thereby facilitating subsequent selective cutting of each material 300.

According to some embodiments of the present application, the winding position 21 and the finishing position 22 are disposed radially opposite each other on the base 20 along a circumference.

Specifically, a track, such as a circular track, can be provided on the base 20. The winding pin 10 at the winding position 21 and the winding pin 10 at the finishing position 22 are disposed at the two ends of a radial direction of the circular track. By controlling the winding pins 10 to move along the circular track, position exchange is achieved.

When the winding pin 10 at the winding position 21 and the winding pin 10 at the finishing position 22 are located at the two ends of a set radial direction of a circular track, the first channels 122 inside the winding pin 10 at the winding position 21 and the first channels 122 inside the winding pin 10 at the finishing position 22 are disposed directly opposite along the set radial direction.

After the winding pin 10 at the winding position 21 completes the winding-attaching process and pulls the material 300 to move from the winding position 21 to the finishing position 22, the first cutter assembly 12 at the finishing position 22 is controlled to extend outward along the radial direction of the main body portion 11. The support member 123 extends outward in the set radial direction toward a side close to the winding position 21, supports and changes the extension direction of the material 300, causing the material 300 extending along the tangential direction of the winding position 21 to be supported to extend along the set radial direction. Then, the first cutter assembly 12 at the position of the winding pin 10 is controlled to extend outward. Naturally, the material 300 can accurately align with the first channel 122 between every two of the cutters, thereby being separated by the cutters.

According to some embodiments of the present application, referring to FIG. 3 and FIGS. 6 to 8, the winding apparatus 100 further includes a second cutter assembly 30, the second cutter assembly 30 being disposed on the base 20 and located between the winding position 21 and the finishing position 22.

Specifically, the second cutter assembly 30 is capable of cutting off the material 300 between the winding position 21 and the finishing position 22, and the first cutter assembly 12 is capable of cutting off the material 300 at the winding position 21. The second cutter assembly 30 being located between the winding position 21 and the finishing position 22 means that it is at a certain position on the movement path of the winding pin 10, which has completed the winding process at the winding position 21, when the winding pin 10 is transferred to the finishing position 22.

Involving a specific embodiment, the winding apparatus 100 of the present application can be used for winding an electrode assembly 220. The anode electrode plate 2201 and the cathode electrode plate 2202 of the electrode assembly 220 form a first material 310, and the separator 2203 forms a second material 320. At the leading end of the electrode assembly 220, the separator 2203 needs to be wound first. After winding the separator 2203 for a certain length, the anode electrode plate 2201 and the cathode electrode plate 2202 are added for winding. For the finishing of the electrode assembly 220, it is necessary to first cut off the anode electrode plate 2201 and the cathode electrode plate 2202. After the finishing of winding is completed, the separator 2203 is wound for a certain length and then cut off.

Therefore, in the present application, the second cutter assembly 30 is provided. After the first cutter assembly 12 cuts off the anode electrode plate 2201 and the cathode electrode plate 2202 of the first material 310, the main body portion 11 of the winding pin 10 at the finishing position 22 is activated to perform finishing winding until finishing of trailing portions of the anode electrode plate 2201 and the cathode electrode plate 2202 is completed, then the separator 2203 is wound alone, and after winding for a certain length, the separator 2203 is cut off through separate control of the second cutter assembly 30.

In other embodiments, the first cutter assembly 12 and the second cutter assembly 30 can be used cooperatively to cut off different first materials 310 and second materials 320 at different timings and positions.

According to some embodiments of the present application, referring to FIG. 3 and FIGS. 6 to 8, the second cutter assembly 30 includes an abutting member 31 and a second cutter 32, the abutting member 31 and the second cutter 32 being configured to be movable relative to the base 20 to move towards each other to cooperatively cut off the material therebetween.

The shape and the size of the abutting member 31 are not limited, and it has an abutting surface directly facing the second cutter 32. When the second cutter 32 and the abutting member 31 move towards each other, the second cutter 32 is capable of abutting the material 300 clamped between them against the abutting surface and cutting it off.

Based on the same concept, referring to FIGS. 4 and 5, the present application further provides a winding pin 10 mentioned in any of the aforementioned embodiments. Its specific structure has been detailed above and will not be repeated here. The winding pin 10 of the present application, by disposing the first cutter 121 inside the winding pin 10, enables the cutting-off of the material 300 to be performed inside the winding pin 10, facilitating the finishing winding of the material 300 and the start of the next winding, thereby improving the production efficiency.

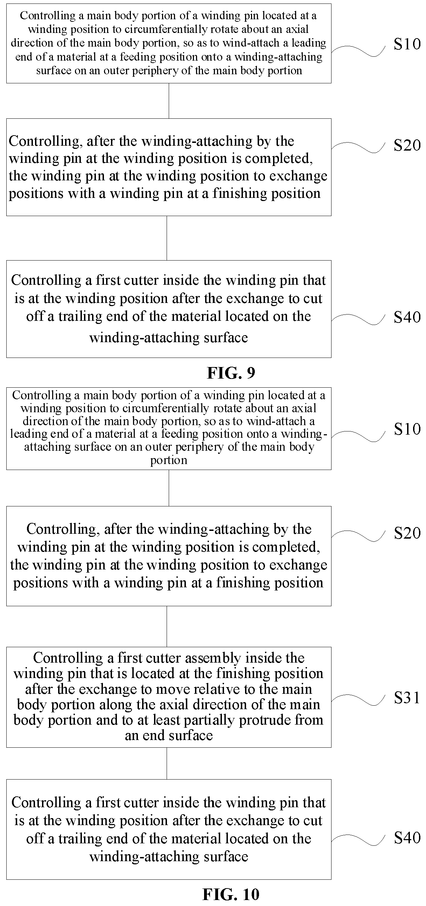

According to another aspect of the present application, a winding method is further provided, which, referring to FIG. 9, specifically includes the following steps.

S10: controlling a main body portion 11 of a winding pin 10 located at a winding position 21 to circumferentially rotate about an axial direction L1 of the main body portion to wind-attach a leading end of a material 300 at a feeding position onto a winding-attaching surface 112 on an outer periphery of the main body portion 11.

Specifically, the process of step S10 is defined as a winding-attaching process. Each winding pin 10 includes a main body portion 11. The main body portion 11 refers to a structure mainly responsible for bearing the winding of the material 300, which has the winding-attaching surface 112 for directly contacting the material 300. After the leading end of the material 300 is connected to the winding pin 10 at the winding position 21, with the rotation of the main body portion 11, the material 300 can be wound onto the winding-attaching surface 112 in successively superimposed turns.

It can be understood that the specific shape of the winding-attaching surface 112 determines the shape of the finally formed material 300 coil. For example, the winding-attaching surface 112 can be a closed circle or ellipse, and in this case, the finally formed material 300 coil can be circular or elliptical.

S20: controlling, after the winding-attaching by the winding pin 10 at the winding position 21 is completed, the winding pin 10 at the winding position 21 to exchange positions with a winding pin 10 at a finishing position 22.

Specifically, the process of step S20 is defined as a position exchange process. Before executing this step, it can be determined whether the winding-attaching process in step S10 has reached a set number of layers. If yes, the winding-attaching process is considered completed, and the process proceeds to the position exchange process in this step.

The winding position 21 and the finishing position 22 are each provided with a winding pin 10. After the winding pin 10 completes the winding-attaching process at the winding position 21, it exchanges positions with the winding pin 10 in the idle process at the finishing position 22, transferring the winding pin 10 at the winding position 21 to the finishing position 22 and transferring the winding pin 10 at the finishing position 22 to the winding position 21.

Furthermore, a track, such as a circular track, can be provided on the base 20. The winding pin 10 at the winding position 21 and the winding pin 10 at the finishing position 22 are disposed at the two ends of a radial direction of the circular track. By controlling the winding pins 10 to move along the circular track, position exchange is achieved, moving the winding pin 10 that has completed the winding-attaching process at the winding position 21 to the finishing position 22. While the winding pin 10 is performing the winding-attaching process at the winding position 21, the winding pin 10 at the finishing position 22 is in the idle process.

S40: controlling a first cutter 121 inside the winding pin 10 that is at the winding position 21 after the exchange to cut off a trailing end of the material 300 located on the winding-attaching surface 112.

Each of the winding pins 10 includes the main body portion 11 and the first cutter 121 located inside the main body portion 11.

Specifically, the process of step S40 is defined as a cutting-off process. The first cutter 121 is disposed inside the main body portion 11 to cut off, at the winding position 21, the trailing end of the material 300 on the winding pin 10 located at the finishing position 22. After the trailing end is cut off, the length of the material 300 undergoing finishing at the finishing position 22 is the distance between the winding position 21 and the finishing position 22. By appropriate setting, the distance between the winding position 21 and the finishing position 22 can be shortened, thereby shortening the finishing length. Furthermore, for the winding pin 10 which has completed finishing at the finishing position 22, after the material 300 roll thereon is removed, it can return to an idle state, so as to facilitate the next cooperation with the winding pin 10 at the winding position 21.

Moreover, since the winding pin 10 currently moved to the winding position 21 cuts off the trailing end of the previous material 300 coil at the winding position 21, when the next winding starts, the leading end of the material 300 is still located at the winding position 21. Therefore, the leading end of the material 300 is relatively close to the winding pin 10 at the winding position 21, and at this time, the winding pin 10 located at the winding position 21 can conveniently and quickly start winding the next material coil 300, thereby improving the production progress.

According to some embodiments of the present application, referring to FIG. 10, prior to step S40, the method further includes the following step.

Step S31: controlling a first cutter assembly 12 inside the winding pin 10 that is located at the finishing position 22 after the exchange to move relative to the main body portion 11 along the axial direction L1 of the main body portion 11 and to at least partially protrude from an end surface 111, so as to dispose the materials 300 spaced apart within a plurality of first channels 122 and a plurality of second channels 1232 of the first cutter assembly 12.

The end surface 111 is located at one end of the main body portion 11 in the axial direction L1 of the main body portion 11, and the first channels 122 and the second channels 1232 are disposed in one-to-one correspondence.

Specifically, the first cutter assembly 12 further includes a plurality of first cutters 121. The number of first cutters 121 included is a plurality, the plurality of first cutters 121 being disposed spaced apart inside the main body portion 11, with a first channel 122 formed between every two of the first cutters 121. The first cutter assembly 12 further includes a support member 123, the support member 123 including a plurality of pinch rollers 1231, where each of the first cutters 121 is provided with a pinch roller 1231, and each of the pinch rollers 1231 extends along the axial direction L1 of the main body portion 11; and the support member 123 is disposed outside the main body portion 11 along a radial direction L2 of the main body portion 11, with a second channel 1232 communicating in one-to-one correspondance with the first channel 122 formed between every two of the pinch rollers 1231.

The support member 123 is configured to support the material 300 before it enters the first channel 122. After the winding pin 10 at the winding position 21 completes the winding-attaching process and is transferred to the finishing position 22, the first cutter assembly 12 inside the winding pin 10 is controlled to extend outward. The plurality of pinch rollers 1231 can extend outward along the axial direction L1 of the main body portion 11 from the end surface 111, separate the trailing-end material 300 of the winding pin 10 and provide a supporting function. At this time, the plurality of materials 300 are disposed spaced apart within the respective second channels 1232 and then extend into the first channels 122.

It can be understood that, before the first cutter assembly 12 inside the winding pin 10 at the finishing position 22 protrudes from the end surface 111, the trailing-end material 300 of the material 300 on the winding-attaching surface 112 of the winding pin 10 extends along a tangential direction of the winding-attaching surface 112; and after the first cutter assembly 12 protrudes from the end surface 111, the plurality of pinch rollers 1231 change the extension direction of the trailing-end material 300, causing it to be disposed spaced apart and parallel between the plurality of pinch rollers 1231.

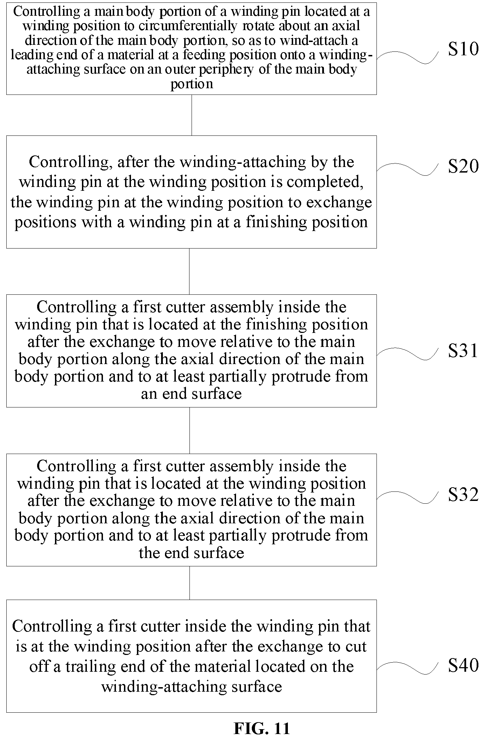

According to some embodiments of the present application, referring to FIG. 11, prior to step S40, the method further includes the following step.

S32: controlling a first cutter assembly 12 inside the winding pin 10 that is located at the winding position 21 after the exchange to move relative to the main body portion 11 along the axial direction L1 of the main body portion 11 and to at least partially protrude from the end surface 111.

Specifically, when the winding pin 10 at the winding position 21 and the winding pin 10 at the finishing position 22 are located at the two ends of a set radial direction of a circular track, the first channels 122 inside the winding pin 10 at the winding position 21 and the first channels 122 inside the winding pin 10 at the finishing position 22 are disposed directly opposite along the set radial direction. When the first cutter assembly 12 inside the winding pin 10 at the winding position 21 extends outward, the plurality of materials 300 supported by the plurality of pinch rollers 1231 at the finishing position 22 can naturally enter the first channels 122 and the second channels 1232 of the winding pin 10 at the winding position 21, thereby facilitating the cutting of the material 300 by the cutter at the winding position 21.

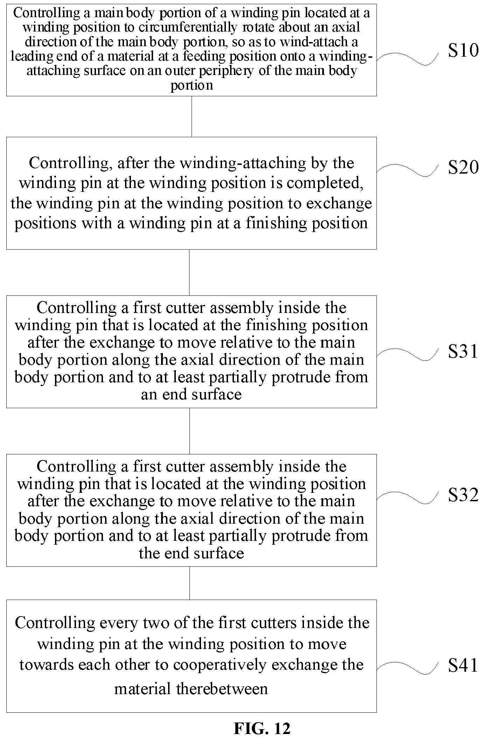

According to some embodiments of the present application, referring to FIG. 12, step S40 specifically includes the following step.

S41: controlling every two adjacent ones of the first cutters 121 inside the winding pin 10 located at the winding position 21 to move towards each other to cooperatively cut off the material 300 therebetween.

It can be understood that after step S32, all the materials 300 are disposed spaced apart within first channels 122 of a plurality of winding pins 10. At this time, a drive mechanism may be provided to drive the cutter to move relative to the main body portion 11 inside the main body portion 11, so as to move to cut off the material 300 when cutting-off of the material 300 is required, and to ensure that the material 300 can pass through and extend out from the first channel 122 when cutting-off of the material 300 is not required.

As such, the winding method of the present application enables cutting-off of the material 300 to be completed inside the winding pin 10, so as to facilitate the next feeding and winding.

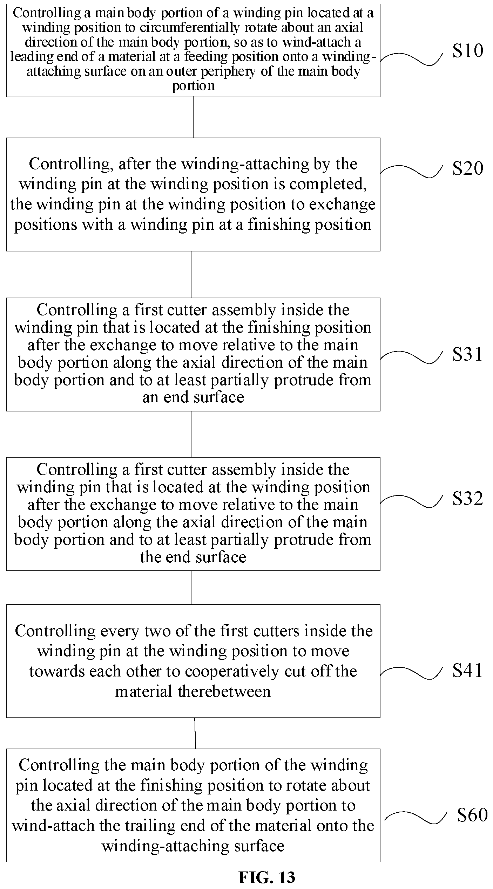

According to some embodiments of the present application, referring to FIG. 13, after step S40, the method further includes the following step.

S60: controlling the main body portion 11 of the winding pin 10 located at the finishing position 22 to rotate about the axial direction L1 of the main body portion to wind-attach the trailing end of the material 300 onto the winding-attaching surface 112.

After the trailing end of the material 300 is cut off in step S40, the winding pin 10 at the winding position 21 completes the cutting-off process. The winding pin 10 located at the finishing position 22 is controlled to restart winding, so as to wind the trailing end of the material 300 between the winding position 21 and the finishing position 22 onto the winding-attaching surface 112. Since the trailing end of the material 300 is cut off at the winding position 21, by reasonably designing the winding position 21 and the finishing position 22 on the base 20, the trailing-end finishing can be shortened, alleviating the winding disqualification phenomenon caused by an excessively long finishing distance when the winding pin 10 at the finishing position 22 completes finishing of the material 300.

Moreover, the winding pin 10 located at the winding position 21, after completing cutting off the material 300, can subsequently continue the winding-attaching process. At this time, the leading end of the material 300 is directly located at the winding position 21, and winding can be directly performed on the winding pin 10 at the winding position 21, without spending excessive time guiding the material 300, thereby simplifying the production process and improving the production efficiency.

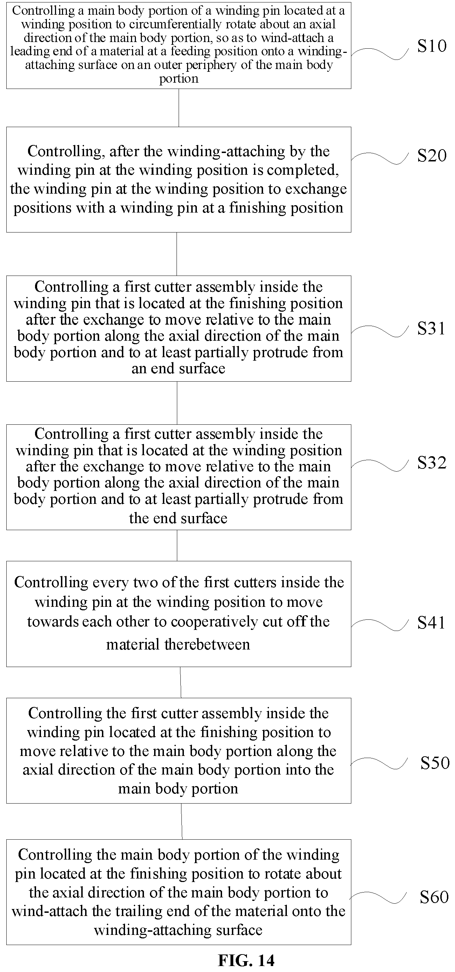

According to some embodiments of the present application, referring to FIG. 14, prior to step S60, the method further includes the following step.

S50: controlling the first cutter assembly 12 inside the winding pin 10 located at the finishing position 22 to move relative to the main body portion 11 along the axial direction L1 of the main body portion 11 into the main body portion 11.

Specifically, at this time, the trailing end of the material 300 supported by the support member 123 returns to its original position, so as to facilitate the subsequent continued winding of the trailing-end material 300 by the winding pin 10, and avoid the need for the main body portion 11 to overcome the force applied by the support member 123 during winding.

Regarding other features of the winding pin 10, detailed descriptions have been provided above and will not be repeated here.

According to some embodiments of the present application, referring to FIGS. 1 to 13, the present application provides a winding apparatus 100 for winding an electrode assembly 220. The winding apparatus 100 includes a base 20 and two winding pins 10. Its specific working process is as follows:
1) providing a winding pin 10 at each of the winding position 21 and the finishing position 22 of the base 20;
2) guiding leading ends of an anode electrode plate 2201, a separator 2203, and a cathode electrode plate 2202 to be stacked and connected to the winding-attaching surface 112 of the winding pin 10 located at the winding position 21; then controlling the main body portion 11 of the winding pin 10 to rotate circumferentially about an axial direction L1 thereof, thereby winding the leading ends of the anode electrode plate 2201, the separator 2203, and the cathode electrode plate 2202 onto the winding-attaching surface 112 in a superimposed manner;
3) executing a position exchange between the winding pin 10 that has completed the winding-attaching process at the winding position 21 and the winding pin 10 at the finishing position 22, at which time, the winding pin 10 carries the anode electrode plate 2201, the cathode electrode plate 2202, and the separator 2203 to extend from the winding position 21 to the finishing position 22 during the movement;
4) controlling the first cutter assembly 12 inside the winding pin 10 at the finishing position 22 to extend outward from the end surface 111, and controlling the first cutter assembly 12 inside the winding pin 10 at the winding position 21 to extend outward from the end surface 111, at which time, the anode electrode plate 2201, the separator 2203, and the cathode electrode plate 2202 separately pass through the second channels 1232 inside the winding position 21 and the finishing position 22 in a spaced-apart manner and enter the first channels 122;
5) causing the first cutter 121 inside the winding pin 10 at the winding position 21 to move inside the main body portion 11, thereby cutting off the anode electrode plate 2201 and the cathode electrode plate 2202 within the first channels 122;
6) controlling the first cutter assembly 12 inside the winding pin 10 at the finishing position 22 to retract into the main body portion 11, and controlling the main body portion 11 to rotate about the axial direction L1 of the main body portion 11 to complete the trailing-end winding of the anode electrode plate 2201 and the cathode electrode plate 2202; and
7) controlling the second cutter assembly 30 located between the winding position 21 and the finishing position 22 to operate to cut off the separator 2203; and through the circumferential rotation of the main body portion 11 at the finishing position 22, completing the trailing-end winding of the separator 2203.

The technical features of the embodiments described above can be combined arbitrarily. In order to make the description concise, not all possible combinations of the technical features in the aforementioned embodiments are described. However, all the combinations of the technical features should be considered as falling within the scope described in this specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A winding apparatus, comprising:
a base having a winding position and a finishing position; and
at least two winding pins, the winding position and the finishing position being each provided with a winding pin, wherein the winding pin at the winding position is capable of exchanging positions with the winding pin at the finishing position; and
each of the winding pins comprising a main body portion and a first cutter assembly, wherein the first cutter assembly comprises a first cutter disposed inside the main body portion; and the main body portion is configured to be circumferentially rotatable about an axial direction thereof relative to the first cutter, wherein an outer periphery of the main body portion is configured as a winding-attaching surface for wind-attaching a material during rotation of the main body portion;
wherein the winding pin located at the winding position wind-attaches a leading end of the material onto the winding-attaching surface, and after the wind-attaching is completed, position exchange with the winding pin located at the finishing position is performed; and the first cutter inside the winding pin that is at the winding position after the exchange cuts off a trailing end of the material located on the winding-attaching surface.

2. The winding apparatus according to claim 1, wherein the number of first cutters in each of the winding pins is a plurality, all the first cutters being disposed spaced apart inside the main body portion, with a first channel formed between every two of the first cutters;
wherein the first cutter is configured to cut off the material within the first channel adjacent to the first cutter.

3. The winding apparatus according to claim 2, wherein every two adjacent ones of the first cutters are configured to be movable towards each other to cooperatively cut off the material within the first channel therebetween.

4. The winding apparatus according to claim 2, wherein the main body portion has an end surface at one end in the axial direction thereof, and the first cutter assembly is configured to be movable relative to the main body portion along the axial direction of the main body portion and at least partially protrude from the end surface.

5. The winding apparatus according to claim 2, wherein the first cutter assembly further comprises a support member, the support member comprising a plurality of pinch rollers, wherein each of the first cutters is provided with a pinch roller, and each of the pinch rollers extends along the axial direction of the main body portion; and
the support member extending outward from the main body portion along a radial direction of the main body portion, with a second channel communicating in one-to-one correspondence with the first channel formed between every two of the pinch rollers.

6. The winding apparatus according to any one of claims 1 to 5, wherein the winding position and the finishing position are disposed radially opposite each other on the base along a circumference.

7. The winding apparatus according to any one of claims 1 to 5, wherein the winding apparatus further comprises a second cutter assembly, the second cutter assembly being disposed on the base and located between the winding position and the finishing position; and
the second cutter assembly being configured to cut off the material between the winding position and the finishing position.

8. The winding apparatus according to claim 7, wherein the second cutter assembly comprises an abutting member and a second cutter, the abutting member and the second cutter being configured to be movable relative to the base to move towards each other to cooperatively cut off the material therebetween.

9. A winding pin, comprising:
a main body portion having a winding-attaching surface on an outer periphery thereof; and
a first cutter assembly comprising a plurality of first cutters, all the first cutters being disposed inside the main body portion, with a first channel formed between every two adjacent ones of the first cutters;
wherein the main body portion is configured to be circumferentially rotatable about an axial direction thereof and to wind-attach a material onto the winding-attaching surface during rotation of the main body portion, and each of the first cutters is configured to be capable of cutting off the material within the first channel adjacent to the first cutter.

10. The winding apparatus according to claim 9, wherein the first cutter assembly further comprises a support member, the support member comprising a plurality of pinch rollers, wherein each of the first cutters is provided with a pinch roller, and each of the pinch rollers extends along the axial direction of the main body portion; and
the support member being disposed outside the main body portion, with a second channel communicating in one-to-one correspondence with the first channel formed between every two of the pinch rollers.

11. The winding apparatus according to claim 10, wherein every two adjacent ones of the first cutters are configured to be movable towards each other to cooperatively cut off the material within the first channel therebetween.

12. The winding pin according to claim 11, wherein each of the first cutters comprises a clamping portion and a cutting portion,
the clamping portions of every two adjacent first cutters being configured to clamp the material within the first channel; and
the cutting portions of every two adjacent first cutters being configured to cut off the clamped material.

13. The winding pin according to any one of claims 10 to 11, wherein the main body portion has an end surface at one end in the axial direction thereof, and the first cutter assembly is configured to be movable relative to the main body portion along the axial direction of the main body portion and at least partially protrude from the end surface.

14. A winding method, comprising the following steps:
controlling a main body portion of a winding pin at a winding position to circumferentially rotate about an axial direction of the main body portion to wind-attach a leading end of a material onto a winding-attaching surface on an outer periphery of the main body portion;
controlling, after the winding-attaching by the winding pin at the winding position is completed, the winding pin at the winding position to exchange positions with a winding pin at a finishing position; and
controlling a first cutter inside the winding pin that is at the winding position after the exchange to cut off a trailing end of the material located on the winding-attaching surface;
wherein each of the winding pins comprises the main body portion and the first cutter located inside the main body portion.

15. The winding method according to claim 14, wherein prior to the step of controlling the first cutter inside the winding pin that is at the winding position after the exchange to cut off the trailing end of the material located on the winding-attaching surface, the method further comprises the following step:
controlling a first cutter assembly inside the winding pin that is located at the finishing position after the exchange to move relative to the main body portion along the axial direction of the main body portion and to at least partially protrude from an end surface, so as to dispose the material spaced apart within a plurality of first channels and a plurality of second channels of the first cutter assembly;
wherein the end surface is located at one end of the main body portion in the axial direction of the main body portion, and the first channels and the second channels are disposed in one-to-one correspondence.

16. The winding method according to claim 15, wherein prior to the step of controlling the first cutter inside the winding pin that is at the winding position after the exchange to cut off the trailing end of the material located on the winding-attaching surface, the method further comprises the following step:
controlling a first cutter assembly inside the winding pin that is located at the winding position after the exchange to move relative to the main body portion along the axial direction of the main body portion and to at least partially protrude from the end surface.

17. The winding method according to claim 16, wherein the step of controlling the first cutter inside the winding pin that is at the winding position after the exchange to cut off the trailing end of the material located on the winding-attaching surface specifically comprises:
controlling every two adjacent ones of the first cutters inside the winding pin located at the winding position to move towards each other to cooperatively exchange the material therebetween.

18. The winding method according to claim 17, wherein after the step of controlling the first cutter inside the winding pin that is at the winding position after the exchange to cut off the trailing end of the material located on the winding-attaching surface, the method further comprises:
controlling the main body portion of the winding pin located at the finishing position to rotate about the axial direction of the main body portion to wind-attach the trailing end of the material onto the winding-attaching surface.

19. The winding method according to claim 18, wherein prior to the step of controlling the main body portion of the winding pin located at the finishing position to rotate about the axial direction of the main body portion to wind-attach the trailing end of the material onto the winding-attaching surface, the method further comprises:
controlling the first cutter assembly inside the winding pin located at the finishing position to move relative to the main body portion along the axial direction of the main body portion into the main body portion.
